# EUROPÄISCHE PATENTSCHRIFT

(11) **EP 3 251 483 B1**
(45) Veröffentlichungstag und Bekanntmachung des Hinweises auf die Patenterteilung: **25.01.2023**
(21) Anmeldenummer: 17401054.6
(22) Anmeldetag: 23.05.2017
(51) Int. Cl.: A01B 61/04

(54) **AUFHÄNGUNGSVORRICHTUNG**
SUSPENSION DEVICE
DISPOSITIF DE SUSPENSION

(30) Priorität: 03.06.2016 DE 102016110285
(43) Veröffentlichungstag der Anmeldung: 06.12.2017
(73) Patentinhaber: Amazonen-Werke H. Dreyer SE & Co. KG, 49205 Hasbergen (DE)
(72) Erfinder: Tanke, Christian, 01723 Kesselsdorf (DE)

(56) Entgegenhaltungen:
- EP-A1- 1 880 589
- EP-A1- 2 404 489
- DE-A1-102009 058 342

## Beschreibung

Die Erfindung betrifft eine Aufhängungsvorrichtung an einer Landmaschine zur Aufhängung eines Maschinenteils, insbesondere eines Bodenbearbeitungswerkzeuges und/oder Säschares gemäß des Oberbegriffes des Anspruches 1.

Eine derartige Aufhängungsvorrichtung ist durch die DE 10 2009 058 342 A1 bekannt.

Eine weitere Aufhängungsvorrichtung ist in EP 2 548 426 A1 beschrieben. Diese Aufhängungsvorrichtung ist zur Aufhängung von Bodenbearbeitungswerkzeugen eines landwirtschaftlichen Bodenbearbeitungsgerätes bestimmt. Diese Aufhängungsvorrichtung weist zumindest einen ein Maschinenteil tragenden Schwenkarm sowie einen quer zur Arbeitsrichtung erstreckenden, als Querträger ausgebildeten Schwenkarmträger, an dem der Schwenkarm mit einem Lagerkörper schwenkbar gelagert ist, auf. Der Lagerkörper umgreift den Schwenkarmträger. Zwischen dem Lagerkörper und dem davon umgriffenen Abschnitt des Schwenkarmträgers sind mehrere elastische Lagerelemente vorgesehen ist, die sich mit ihrer Längsachse parallel zu der Schwenkachse des Schwenkarmes und der Längsachse des Schwenkträgers erstrecken und durch Schwenkbewegungen des Schwenkarmes eine zumindest teilweise Verformung erfahren. Auf der Oberfläche der elastischen Lagerelemente ist im Bereich der Lagerkörper jeweils eine ringförmige Erhebung angeordnet. Durch diese ringförmige Erhebung auf dem elastischen Lagerelement soll ein besseres Verklemmen des Lagerelementes in dem Lagerkörper durch die Erzeugung eines erhöhten Druckes und der daraus resultierenden höheren Reibung erreicht werden, damit diese einem möglichen Herauswandern der Lagerelemente aus dem Lagerkörper entgegenwirkt.

Praktische Einsätze haben nun gezeigt, dass diese Ausgestaltungen zwar das Herauswandern etwas hemmen, jedoch nicht in ausreichender Weise verhindern kann.

Der Erfindung liegt die Aufgabe zu Grunde, mit einfachen Maßnahmen und in preiswerter Weise dem Herauswandern der Lagerelemente aus dem Lagerkörper noch besser entgegenwirken zu können.

Diese Aufgabe wird durch die kennzeichnenden Merkmale des Patentanspruches 1 gelöst.

Infolge dieser Maßnahmen, insbesondere dem Zusammenspiel zwischen einer Vertiefung bei dem Lagerelement und der entgegengesetzten Erhöhung bei dem Lagerkörper in miteinander korrespondierender Weise wird ein Formschluss zwischen dem Lagerelement und dem Lagerkörper geschaffen, welcher wirksam ein verbessertes verhindern des Herauswanderns der elastischen Lagerelemente aus dem Lagerkörper sicherstellt.

Eine optimierte Ausgestaltung eines guten Formschlusses zwischen dem elastischen Lagerelement und dem Lagerkörper lässt sich dadurch erreichen, dass die Erhebungen und Vertiefungen zur Schaffung eines Formschlusses zwischen dem zumindest einem elastischen Lagerelement einerseits und der Innenseite des Lagerkörpers andererseits in ihrer Ausgestaltung und/oder Größe aufeinander abgestimmt ausgebildet sind.

Eine verbesserte Verhinderung des Herauswanderns des Lagerelementes aus dem Lagerkörper wird dadurch geschaffen, dass die Erhebungen und/oder Vertiefungen zur Schaffung eines Formschlusses zwischen dem zumindest einem elastischen Lagerelement einerseits und der Innenseite des Lagerkörpers andererseits ineinander eingreifend ausgebildet sind.

Weitere Einzelheiten der Erfindung sind der Beispielsbeschreibung und den Zeichnungen zu entnehmen. Die Zeichnungen zeigen
- Fig.1: die Aufhängungsvorrichtung für ein Säschar einer als Sämaschine ausgebildeten Landmaschine in perspektivischer Ansicht,
- Fig.2: die Aufhängungsvorrichtung mit dem Lagerkörper und dem Schwenkarm in perspektivischer Ansicht und vergrößertem Maßstab,

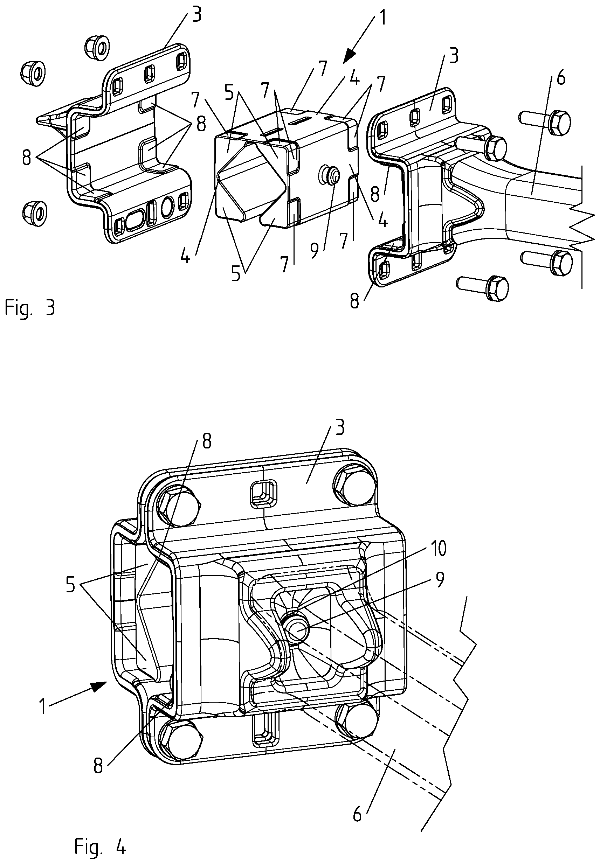

- Fig.3: die Aufhängungsvorrichtung mit Lagerkörper und elastischen Lagerelementen in Explosionsdarstellung und in perspektivischer Ansicht gemäß Schnitt III - III,
- Fig.4: die Aufhängungsvorrichtung mit Lagerkörper und elastischen Lagerelementen in perspektivischer Ansicht gemäß Schnitt III - III,

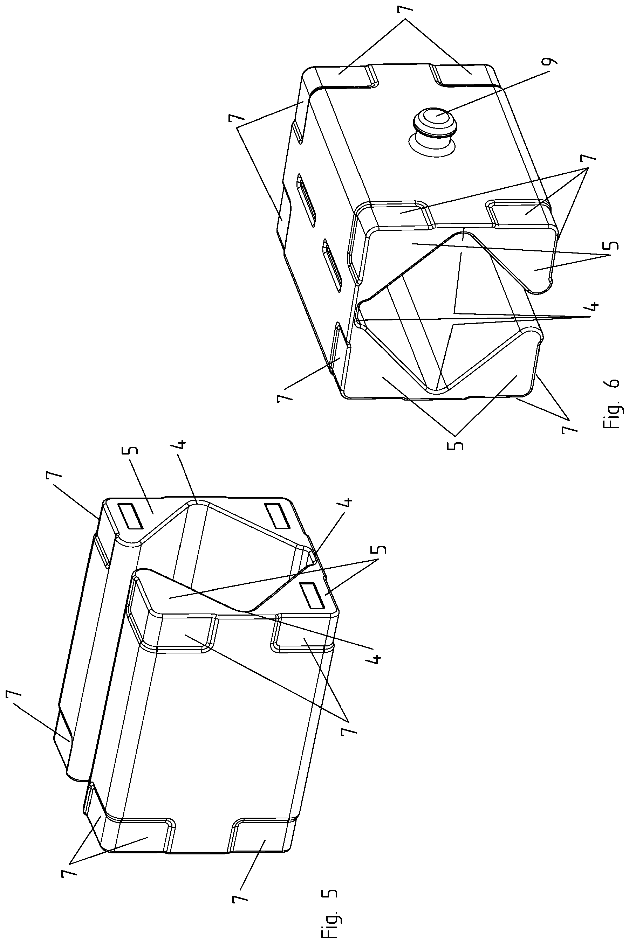

- Fig.5: das elastische Lagerelement in perspektivischer Ansicht von vorne und
- Fig.6: das elastische Lagerelement in perspektivischer Ansicht von hinten.

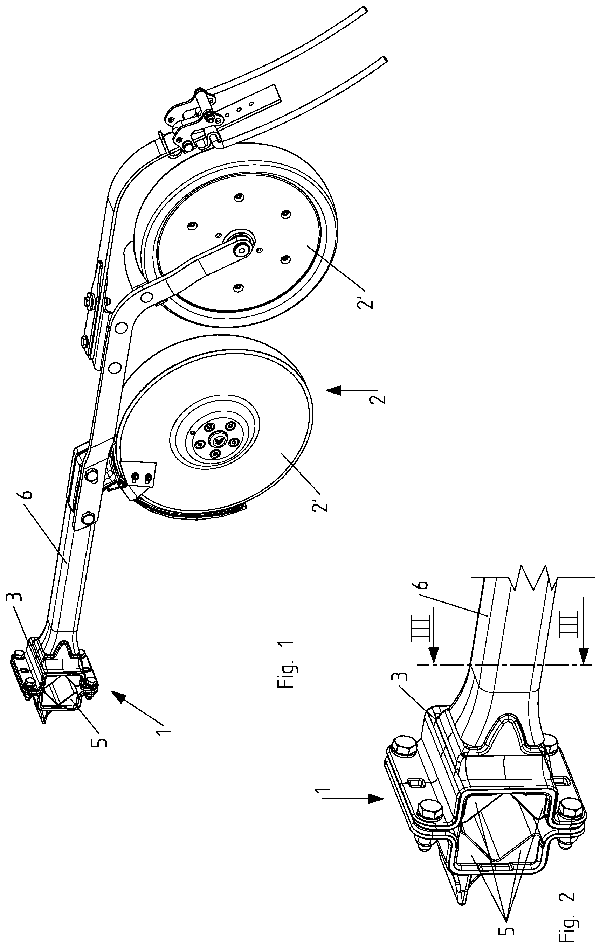

Die Aufhängungsvorrichtung 1 dient zur Anordnung des in Fig.1 dargestellten als Säschar 2 ausgebildeten Maschinenteiles, welches auch als Bodenbearbeitungswerkzeug ausgebildet sein kann, für eine nicht dargestellte als Sämaschine ausgebildete Landmaschine. Der Aufhängungsvorrichtung 1 weist einen Lagerkörper 3 auf, der einen nicht dargestellten und sich quer zur Arbeitsrichtung erstreckenden als Querträger ausgebildeten Schwenkarmträgers umgreift.

Zwischen dem Lagerkörper 3 und dem davon umgriffenen Abschnitt des Schwenkarmträgers sind die im Ausführungsbeispiel vier elastischen und über Zwischenstücke 4 miteinander verbundenen Lagerelemente 5 angeordnet zur federnden Lagerung des Lagerkörpers 3 mit dem daran angeordnetem Schwenkarm 6 welcher die Scharelemente 2' des Schares 2 trägt. Gegen die Federkraft der elastischen Lagerelemente 5 kann der Lagerkörper 3 mit dem Schwenkarm 6 und dem daran angeordnetem Säschar 2 im begrenztem Umfang verschwenken.

Die Längsachse der elastischen Lagerelemente erstrecken sich parallel zu der Schwenkachse des Schwenkarmes und der Längsachse des Schwenkträgers. Durch die Schwenkbewegungen des Schwenkarmes erfahren elastischen Lagerelemente eine zumindest teilweise Verformung. Auf der Oberfläche der elastischen Lagerelemente sind im Ausführungsbeispiel in deren Außenbereich im Bereich des Lagerkörpers mehrere Vertiefungen angebracht. Auf der Innenseite des Lagerkörpers im Bereich des elastischen Lagerelementes korrespondierend mit den auf der Oberfläche der elastischen Lagerelemente angeordneten Vertiefungen entsprechende in diese eingreifende Erhebungen angeordnet. Durch die ineinander eingreifenden Erhebungen und Vertiefungen ergibt sich ein Formschluss zwischen den elastischen Lagerelementen einerseits und dem Lagerkörper andererseits.

Die Erhebungen können auch an den elastischen Lagerelementen und die Vertiefungen in dem Lagerkörper angeordnet sein, wie beispielweise das Ansatzelement an dem elastischen Lagerelement. Dieses Ansatzelement greift in die als Aussparung ausgebildete Vertiefung in dem Lagerkörper ein, wie die Zeichnungen zeigen. Dieses in die Aussparung in dem Lagerkörper eingreifende Ansatzelement dient zusätzlich zur Erleichterung der Montage.

Die Erhebungen und/oder Vertiefungen sind zur Schaffung eines Formschlusses zwischen dem zumindest einem elastischen Lagerelement einerseits und/oder der Innenseite des Lagerkörpers und/oder dem Schwenkarmträger andererseits in ihrer Ausgestaltung und/oder Größe aufeinander abgestimmt ausgebildet.

Wie bereits erwähnt sind die Erhebungen und/oder Vertiefungen zur Schaffung eines Formschlusses zwischen dem zumindest einem elastischen Lagerelement einerseits und/oder der Innenseite des Lagerkörpers und/oder dem Schwenkarmträger andererseits ineinander eingreifend ausgebildet.

Hierbei können die Erhebungen und/oder Vertiefungen zur Schaffung eines Formschlusses zwischen dem zumindest einem elastischen Lagerelement einerseits und/oder der Innenseite des Lagerkörpers und/oder dem Schwenkarmträger andererseits ineinander eingreifend ausgebildet sind.

## Patentansprüche

1. Aufhängungsvorrichtung (1) an einer Landmaschine zu Aufhängung eines Maschinenteils (2, 2'), insbesondere eines Bodenbearbeitungswerkzeuges und/oder Säschares (2), mit zumindest einem das Maschinenteil (2, 2') tragenden Schwenkarm (6) sowie einem sich quer zur Arbeitsrichtung erstreckenden, als Querträger ausgebildeten Schwenkarmträger, an dem der Schwenkarm (6) mit einem Lagerkörper (3) schwenkbar gelagert ist, wobei der Lagerkörper (3) den Schwenkarmträger umgreift und zwischen dem Lagerkörper (3) und dem davon umgriffenen Abschnitt des Schwenkarmträgers zumindest ein elastisches Lagerelement (5) vorgesehen ist, das sich mit seiner Längsachse im Wesentlichen parallel zu der Schwenkachse des Schwenkarmes (6) und der Längsachse des Schwenkarmträgers erstreckt und durch Schwenkbewegungen des Schwenkarmes (6) eine zumindest teilweise Verformung erfährt, **dadurch gekennzeichnet, dass** auf der Oberfläche des elastischen Lagerelementes im Bereich des Lagerkörpers (3) zumindest eine Vertiefung (7) und auf der Innenseite des Lagerkörpers (3) im Bereich des elastischen Lagerelementes (5) zumindest eine Erhebung (8) zur Schaffung eines Formschlusses zwischen dem zumindest einem elastischen Lagerelement (5) einerseits und der Innenseite des Lagerkörpers (3) andererseits angeordnet ist.

2. Aufhängungsvorrichtung nach Anspruch 1, **dadurch gekennzeichnet, dass** die Erhebungen (8) und/oder Vertiefungen (7) zur Schaffung eines Formschlusses zwischen dem zumindest einem elastischen Lagerelement (5) einerseits und der Innenseite des Lagerkörpers (3) andererseits in ihrer Ausgestaltung und/oder Größe aufeinander abgestimmt ausgebildet sind.

3. Aufhängungsvorrichtung nach zumindest einem der vorstehenden Ansprüche, **dadurch gekennzeichnet, dass** die Erhebungen (8) und/oder Vertiefungen (7) zur Schaffung eines Formschlusses zwischen dem zumindest einem elastischen Lagerelement (5) einerseits und der Innenseite des Lagerkörpers (3) andererseits ineinander eingreifend ausgebildet sind.

## Claims

1. A suspension device (1) on an agricultural machine for suspension of a machine part (2, 2'), in particular of a soil tilling tool and/or sowing coulter (2), with at least one pivot arm (6) carrying the machine part (2, 2'), and a pivot arm carrier extending transverse to the working direction and designed as a cross member, on which pivot arm carrier the pivot arm (6) is pivotably mounted with a bearing body (3), wherein the bearing body (3) engages around the pivot arm carrier and at least one elastic bearing element (5) is provided between the bearing body (3) and the portion of the pivot arm carrier surrounded thereby, which elastic bearing element extends with its longitudinal axis substantially parallel to the pivot axis of the pivot arm (6) and the longitudinal axis of the pivot arm carrier and undergoes an at least partial deformation via pivoting movements of the pivot arm (6), **characterized in that** at least one depression (7) is arranged on the surface of the elastic bearing element in the region of the bearing body (3), and at least one elevation (8) for creating a form-fitting connection between the at least one elastic bearing element (5) on the one hand and the inner side of the bearing body (3) on the other hand is arranged on the inner side of the bearing body (3) in the region of the elastic bearing element (5).

2. The suspension device according to claim 1, **characterized in that** the elevations (8) and/or depressions (7) for creating a form-fitting connection between the at least one elastic bearing element (5) on the one hand and the inner side of the bearing body (3) on the other hand are designed to be coordinated with one another in their design and/or size.

3. The suspension device according to at least one of the preceding claims, **characterized in that** the elevations (8) and/or depressions (7) for creating a form-fitting connection between the at least one elastic bearing element (5) on the one hand and the inner side of the bearing body (3) on the other hand are designed to engage with one another.

## Revendications

1. Dispositif de suspension (1) à une machine agricole pour la suspension d'une partie de machine (2, 2'), en particulier d'un outil de traitement du sol et/ou d'un soc de semoir (2), présentant au moins un bras pivotant (6) portant la partie de machine (2, 2') ainsi qu'un support de bras pivotant s'étendant transversalement par rapport à la direction de travail, conçu sous forme de support transversal, sur lequel le bras pivotant (6) est logé de manière pivotante à l'aide d'un corps d'appui (3), le corps d'appui (3) entourant le support de bras pivotant et au moins un élément d'appui élastique (5) étant situé entre le corps d'appui (3) et la section qu'il entoure du support de bras pivotant, lequel élément d'appui s'étend avec son axe longitudinal de manière sensiblement parallèle à l'axe de pivotement du bras pivotant (6) et à l'axe longitudinal du support de bras pivotant et subit une déformation au moins partielle par les mouvements de pivotement du bras pivotant (6), **caractérisé en ce qu'**au moins un renfoncement (7) est agencé sur la surface de l'élément d'appui élastique, dans la zone du corps d'appui (3) et au moins une élévation (8) est agencée sur la face interne du corps d'appui (3) dans la zone de l'élément d'appui élastique (5) pour réaliser une liaison par complémentarité de forme entre ledit au moins un élément d'appui élastique (5) d'une part et la face interne du corps d'appui (3) d'autre part.

2. Dispositif de suspension selon la revendication 1, **caractérisé en ce que** les élévations (8) et/ou les renfoncements (7), pour réaliser une liaison par complémentarité de forme entre ledit au moins un élément d'appui élastique (5) d'une part et la face interne du corps d'appui (3) d'autre part, sont conçus, dans leur configuration et/ou leur dimension, de manière adaptée les uns aux autres.

3. Dispositif de suspension selon au moins l'une quelconque des revendications précédentes, **caractérisé en ce que** les élévations (8) et/ou les renfoncements (7), pour réaliser une liaison par complémentarité de forme entre ledit au moins un élément d'appui élastique (5) d'une part et la face interne du corps d'appui (3) d'autre part, sont conçus de manière à s'emboîter l'un dans l'autre.
